# EUROPÄISCHE PATENTANMELDUNG

(11) **EP 3 470 118 A1**
(43) Veröffentlichungstag der Anmeldung: **17.04.2019**
(21) Anmeldenummer: 17196305.1
(22) Anmeldetag: 13.10.2017
(51) Int. Cl.: A62C 2/06, F16L 5/04, A62C 3/16

(54) **BRANDSCHUTZVORRICHTUNG**

(71) Anmelder: HILTI Aktiengesellschaft, 9494 Schaan (LI)
(72) Erfinder: Paetow, Mario, 86899 Landsberg am Lech (DE); Semler, Rudolf, 86931 Prittriching (DE)
(74) Vertreter: Hilti Aktiengesellschaft Corporate Intellectual Property

(57) **Zusammenfassung**

Es wird eine Brandschutzvorrichtung (10) zum Abdichten von Wand- oder Deckendurchbrüchen angegeben, aufweisend ein Gehäuse (14), welches eine Gehäusewand (15) und jeweils eine Öffnung (16,17) an den entgegengesetzten Enden der Gehäusewand (15) aufweist, und mindestens einen in dem Gehäuse (14) angeordneten Schlauch (12) aus einem faltbaren Material, wobei der Schlauch (12) entlang einem umlaufenden Rand einer der Öffnungen (16, 17) angeordnet ist, und wobei zwischen dem Schlauch (12) und der Gehäusewand (15) ein intumeszierendes Material (18) angeordnet ist.

## Beschreibung

Die vorliegende Erfindung betrifft eine Brandschutzvorrichtung zur Durchführung von Rohren oder Leitungen durch eine Gebäudeöffnung, beispielsweise einen Wand- oder Deckendurchbruch.

Derartige Durchführungen in Wänden oder Decken müssen die geltenden Anforderungen hinsichtlich Brandschutz erfüllen. Das heißt, die Wand- und Deckendurchbrüche müssen in ausreichendem Maß gegen die Weiterleitung von Bränden gesichert sein. Zudem soll eine thermische Sicherung der Räume gewährleistet sein, sodass verhindert wird, dass die Temperatur auf einer dem Feuer abgewandten Seite der betreffenden Decke oder Wand so stark ansteigt, dass es dort zur Selbstentzündung kommen kann. Dabei soll die Installation der Leitungen möglichst einfach durchführbar sein.

Es ist bekannt, zu diesem Zweck kastenförmige Gehäuse in die Öffnungen einzusetzen, die einen Durchlasskanal für die zu installierenden Leitungen und Rohre bilden. Solche Gehäuse können in eine Wand oder Decke eingegossen und nach dem Durchführen der Leitungen mit Dichtmasse gefüllt werden. Dieses Verfahren ist jedoch aufgrund der Aushärtezeiten der Dichtmasse und des handwerklichen Aufwands relativ hoch. Anstelle der Dichtmasse kann ein intumeszierendes Material in dem Gehäuse angeordnet sein, das sich im Brandfall aufbläht. Allerdings kann es passieren, dass das intumeszierende Material im Brandfall aus dem Gehäuse ausläuft, was sich negativ auf die Zuverlässigkeit des Brandschutzes auswirkt.

Es ist daher eine Aufgabe der vorliegenden Erfindung, eine Brandschutzvorrichtung anzugeben, die einfach zu installieren und im Brandfall besonders zuverlässig ist.

Diese Aufgabe wird erfindungsgemäß gelöst durch eine Brandschutzvorrichtung zum Abdichten von Wand- oder Deckendurchbrüchen, aufweisend ein Gehäuse, welches eine Gehäusewand und jeweils eine Öffnung an den entgegengesetzten Enden der Gehäusewand aufweist, und mindestens einen in dem Gehäuse angeordneten Schlauch aus einem faltbaren Material, wobei der Schlauch entlang einem umlaufenden Rand einer der Öffnungen angeordnet ist, und wobei zwischen dem Schlauch und der Gehäusewand ein intumeszierendes Material angeordnet ist.

Der Schlauch ist derart ausgebildet, dass er im Brandfall eine Auffangsicherung für das intumeszierende Material bildet. Dadurch, dass das intumeszierende Material zwischen dem Schlauch und der Gehäusewand angeordnet ist, kann verhindert werden, dass im Brandfall intumeszierendes Material aus dem Gehäuse auslaufen kann. Das intumeszierende Material kann sich somit im Brandfall innerhalb des Gehäuses verpressen und weist dadurch eine hohe mechanische Stabilität auf. Durch eine ausreichende mechanische Stabilität wird gewährleistet, dass das intumeszierende Material beispielsweise bei Löscharbeiten in dem Gehäuse verbleibt, und nicht durch einen auftreffenden Wasserstrahl aus dem Gehäuse gespült wird.

Die Brandschutzvorrichtung verhindert folglich besonders zuverlässig die Ausbreitung eines Brandes. Um eine ordnungsgemäße Funktion der Brandschutzvorrichtung zu gewährleisten, muss die Öffnung des Gehäuses, an deren umlaufenden Rand der Schlauch angeordnet ist, in einem montierten Zustand in einer Decke nach unten weisen.

Der Schlauch kann beispielsweise aus einem Streifen des faltbaren Materials hergestellt werden, indem die Enden des Streifens zusammengenäht werden. Auf diese Weise kann die Herstellung des Schlauchs besonders kostengünstig sein. Alternativ kann der Schlauch derart hergestellt werden, dass der Schlauch keine Nähte oder sonstige Trennstellen aufweist, beispielsweise mittels Webens. In einer weiteren Ausführungsform kann der Schlauch auch aus mehreren Teilen hergestellt werden, beispielsweise durch Zusammennähen von zwei Streifen aus dem faltbaren Material.

Die Brandschutzvorrichtung weist bereits von vornherein alle notwendigen Komponenten auf, um einen zuverlässigen Brandschutz zu gewährleisten. Somit sind nach dem Einsetzen der Brandschutzvorrichtung in einen Wand- oder Deckendurchbruch keine weiteren Maßnahmen notwendig, um vollen Brandschutz zu erreichen. Insbesondere ist die Brandschutzvorrichtung derart ausgebildet, dass sie einem UL-Brandtest für mindestens zwei Stunden standhält.

Gemäß einer Ausführungsform ist der Schlauch in mindestens einem Befestigungspunkt an der Gehäusewand befestigt. Dadurch kann die Bewegungsfreiheit des Schlauchs derart eingeschränkt sein, dass er im Brandfall zuverlässig dafür sorgt, dass das intumeszierende Material im Gehäuse verbleibt und nicht ausläuft. Insbesondere verhindert der Befestigungspunkt, dass der Schlauch komplett umgestülpt werden kann.

Der Schlauch kann auch in zwei gegenüberliegenden Befestigungspunkten an der Gehäusewand befestigt sein. Die Zuverlässigkeit der Brandschutzvorrichtung kann auf diese Weise gegenüber der Ausführungsform mit nur einem Befestigungspunkt noch verbessert sein.

Die Befestigungspunkte können des Weiteren genutzt werden, um aus einem oder mehreren Streifen des faltbaren Materials den Schlauch zu bilden. Beispielsweise werden bei der Montage des faltbaren Materials in dem Gehäuse die Befestigungspunkte an den Trennstellen des Schlauchs angeordnet und so die Enden der Streifen aus dem faltbaren Material fest miteinander verbunden. Dies hat den Vorteil, dass der Schlauch vor der Montage nicht erst vernäht werden muss.

Die Befestigungspunkte können durch Niete, Nägel, Schrauben oder sonstige Befestigungsmittel gebildet sein, die geeignet sind, das faltbare Material an der Gehäusewand zu befestigen.

Der Schlauch verläuft in einem Ausgangszustand vorzugsweise im Wesentlichen parallel zur Gehäusewand und ist zumindest abschnittsweise frei beweglich angeordnet. Mit Ausgangszustand ist ein Zustand gemeint, bevor ein Brandfall eingetreten ist.

Dadurch, dass der Schlauch im Wesentlichen parallel zu der Gehäusewand verläuft, können Leitungen besonders einfach durch das Gehäuse hindurch geführt werden, ohne dass der Schlauch vorher zur Seite geschoben werden muss. Die freie Beweglichkeit des Schlauchs in zumindest einigen Abschnitten sorgt dafür, dass sich das intumeszierende Material im Brandfall aufblähen und das Gehäuse vollständig verschließen kann. Der Schlauch wird dabei in den entsprechenden Abschnitten von dem intumeszierenden Material von der Gehäusewand weg gedrückt.

Vorzugsweise ist der Schlauch derart frei beweglich angeordnet, dass das faltbare Material zumindest abschnittsweise bis zu einem Winkel von 100° zur Gehäusewand auffaltbar ist. Besonders bevorzugt ist das faltbare Material bis zu einem Winkel von 90° auffaltbar. Im Brandfall kann das faltbare Material die nach unten gerichtete Öffnung des Gehäuses verschließen, sodass das intumeszierende Material vollständig im Gehäuse gehalten wird. Die Brandschutzvorrichtung ist dadurch besonders zuverlässig.

Gemäß einer Ausführungsform kann die Brandschutzvorrichtung zwei Schläuche aus faltbarem Material aufweisen, wobei jeder Schlauch entlang einem umlaufenden Rand einer Öffnung angeordnet ist. In diesem Fall ist die Ausrichtung der Brandschutzvorrichtung in einem Deckendurchbruch irrelevant. Somit kann verhindert werden, dass die Brandschutzvorrichtung aufgrund von Anwendungsfehlern, insbesondere durch falsche Montage, im Brandfall versagt. Darüber hinaus ist diese Ausführungsform besonders gut für Wanddurchbrüche geeignet, da beidseitig ein Auslaufen von intumeszierendem Material verhindert wird.

Das intumeszierende Material ist beispielsweise in Form eines Streifens zwischen dem Schlauch und der Gehäusewand angeordnet. Auf diese Weise kann das intumeszierende Material besonders einfach vorkonfektioniert und montiert werden.

Das intumeszierende Material kann an einer Gehäusewand oder an mehreren beziehungsweise allen Gehäusewänden angeordnet sein. Zur Befestigung des intumeszierenden Materials kann ein Klebstoff verwendet werden. In einer weiteren Ausführungsform kann das intumeszierende Material an dem Schlauch befestigt sein, beispielsweise mittels Klebens.

Das faltbare Material kann ein Gewebe, ein Gelege oder ein Gitter aufweisen. Derartige Materialien können das intumeszierende Material besonders gut auffangen.

Vorzugsweise weist das faltbare Material Glasfasern, Keramikfasern und/oder Metallfasern auf oder besteht aus derartigen Fasern. So kann erreicht werden, dass das faltbare Material feuerfest ist.

Gemäß einer Ausführungsform kann das Gehäuse integrierte Bürsten aufweisen. Die Bürsten können das Gehäuse blickdicht machen und bereits als Konvektionssperre fungieren, bevor die Temperaturen erreicht sind, bei denen sich das intumeszierende Material aufbläht. Es können auch andere Materialien, wie z. B. Brandschutzschäume, Brandschutzmatten, Brandschutzgewebe, Mineralwolle, Brandschutzlamellen verwendet werden.

In einer alternativen Ausführungsform kann die Brandschutzeinrichtung wenigstens einen Schlauch aufweisen, der vollumfänglich um die Gehäusewand angeordnet ist.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 schematisch eine erfindungsgemäße Brandschutzvorrichtung in einem Horizontalschnitt,
- Figur 2 schematisch einen Querschnitt durch die Brandschutzvorrichtung aus Figur 1,
- Figur 3 schematisch einen Querschnitt durch die Brandschutzvorrichtung im Brandfall,
- Figur 4 schematisch eine weitere erfindungsgemäße Brandschutzvorrichtung in einem Horizontalschnitt,
- Figur 5 schematisch einen Querschnitt durch die Brandschutzvorrichtung aus Figur 4, und
- Figur 6 schematisch einen Querschnitt durch eine weitere erfindungsgemäße Brandschutzvorrichtung, wobei das intumeszierende Material und der mindestens eine Schlauch teilweise auch durch ein anderes Material ersetzt ist und ein Teil der Öffnung so verschlossen werden kann.

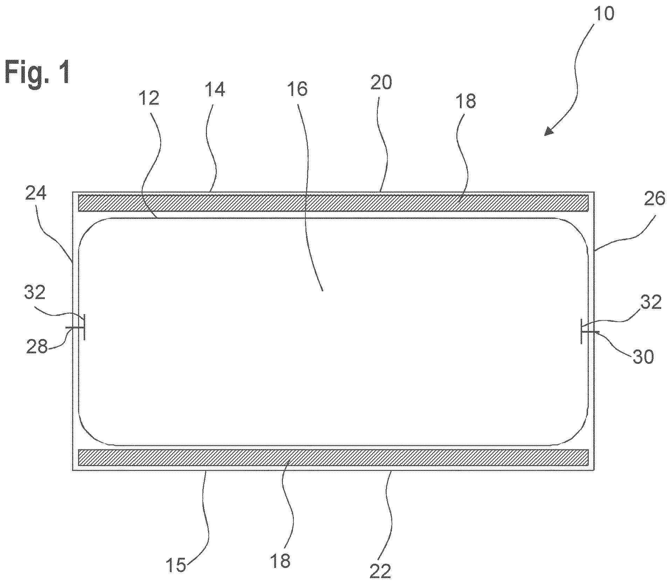

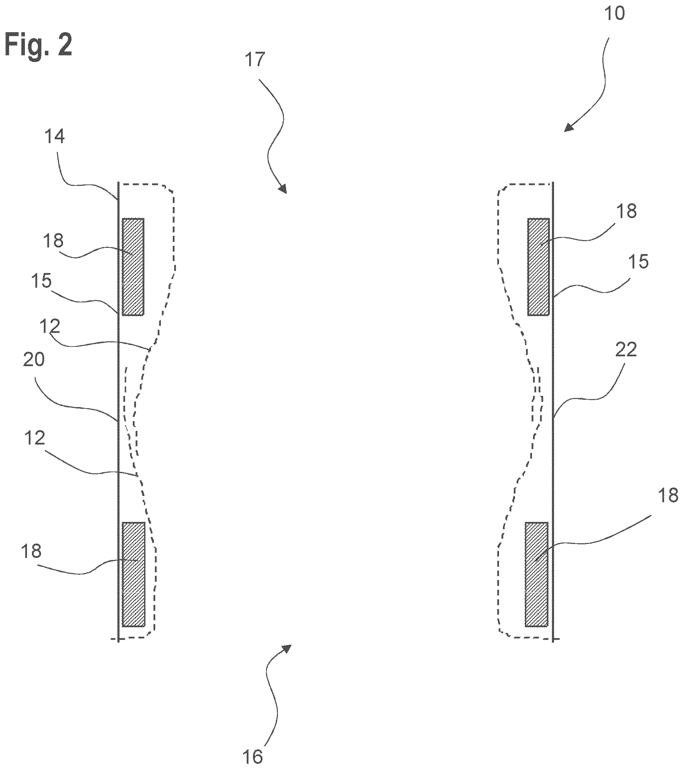

Figur 1 zeigt schematisch eine Brandschutzvorrichtung 10 in einem Horizontalschnitt. Die Brandschutzvorrichtung 10 weist einen Schlauch 12 aus einem faltbaren Material auf, der in einem Gehäuse 14 angeordnet ist. Insbesondere ist der Schlauch 12 an einem umlaufenden Rand einer Gehäuseöffnung 16 befestigt. Dies wird in Zusammenhang mit Figur 2 genauer erläutert.

Zwischen einer Gehäusewand 15 und dem Schlauch 12 ist an den zwei gegenüberliegenden Längsseiten 20, 22 des Gehäuses 14 ein intumeszierendes Material 18 in Form von Streifen angebracht. Das intumeszierende Material 18 erstreckt sich vorzugsweise vollständig über die Längsseiten 20, 22 des Gehäuses 14. Das intumeszierende Material 18 kann an dem Gehäuse 14 oder an dem Schlauch 12 befestigt sein, beispielsweise mittels eines Klebstoffes.

Der Schlauch 12, insbesondere das faltbare Material, kann beispielsweise ein Gelege, Gewebe oder Gitter aus Glasfasern, Keramikfasern und/oder Metallfasern sein. Insbesondere ist das faltbare Material feuerfest.

Das Gehäuse 14 kann aus Kunststoff oder Metall bestehen. In der gezeigten Ausführungsform weist das Gehäuse 14 einen rechteckigen Querschnitt auf, beispielsweise eine Länge von 50 cm und eine Breite von 20 cm. Je nach Anwendungsfall kann das Gehäuse 14 jedoch auch einen runden Querschnitt oder andere Querschnittsformen aufweisen. Um die Positionierung des Gehäuses 14 in einem Wand- oder Deckendurchbruch zu vereinfachen, kann das Gehäuse 14 einen (nicht dargestellten) umlaufenden Flansch aufweisen.

An den Stirnseiten 24, 26 ist der Schlauch 12 in zwei Befestigungspunkten 28, 30 mittels Nägeln 32 an dem Gehäuse 14, insbesondere an der Gehäusewand 15 befestigt. Zur Befestigung können jedoch auch Schrauben, Niete oder sonstige Befestigungsmittel genutzt werden. Außerhalb der Befestigungspunkte 28, 30 ist der Schlauch 12 frei beweglich angeordnet.

Figur 2 zeigt schematisch einen Querschnitt durch die Brandschutzvorrichtung 10 aus Figur 1. Die Brandschutzvorrichtung 10 weist insgesamt zwei Schläuche 12 auf, wobei ein erster Schlauch 12 an einem umlaufenden Rand der unteren Öffnung 16 befestigt ist, beispielsweise mittels Klebens, Schweißens oder durch sonstige Befestigungsmittel wie Nägel oder Klammern. Derartige Befestigungsmittel sind in Figur 2 jedoch nicht dargestellt. Ein zweiter Schlauch 12 ist an einem umlaufenden Rand der oberen Öffnung 17 befestigt.

Die Begriffe "unten" und "oben" beziehen sich dabei auf einen Zustand, in dem die Brandschutzvorrichtung 10 in einer Decke montiert ist.

An den Längsseiten 20, 22 des Gehäuses 14 sind jeweils zwei Streifen aus intumeszierendem Material 18 zwischen einem Schlauch 12 und dem Gehäuse 14 angeordnet.

Diese Ausführungsform hat den Vorteil, dass die Ausrichtung der Brandschutzvorrichtung 10 beim Einbau in einen Deckendurchbruch nicht relevant ist. Auf diese Weise kann ein falscher Einbau in einem Deckendurchbruch verhindert werden. Zudem wird durch das zusätzliche intumeszierende Material eine besonders dicke Brandschutzbarriere gebildet. Es ist jedoch ausreichend, die Brandschutzvorrichtung 10 mit lediglich einem Schlauch 12 zu versehen, solange der Schlauch 12 in einem montierten Zustand an dem umlaufenden Rand der unteren Öffnung 16 montiert ist.

Im Folgenden wird die Wirkweise der Brandschutzvorrichtung 10 genauer erläutert.

In den Figuren 1 und 2 ist die Brandschutzvorrichtung 10 jeweils in einem Ausgangszustand gezeigt, das heißt, bevor ein Brandfall eingetreten ist. Der Schlauch 12 verläuft in diesem Zustand im Wesentlichen parallel zu der Gehäusewand 15, wie in den Figuren 1 und 2 dargestellt, wobei der Schlauch 12 an den Stellen, an denen das intumeszierende Material 18 angeordnet ist, leicht ausgebeult sein kann. Durch eine derartige Anordnung des Schlauches 12 sind die Öffnungen 16, 17 frei und eine Leitung kann bei einer Installation besonders einfach durch das Gehäuse 14 hindurch geführt werden. Zudem weist die Brandschutzvorrichtung 10 eine hohe Flexibilität hinsichtlich der Größe und Positionierung der Leitungen und Rohre auf, die durch einen Wand- oder Deckendurchbruch, insbesondere durch die Brandschutzvorrichtung 10, hindurch geführt werden sollen.

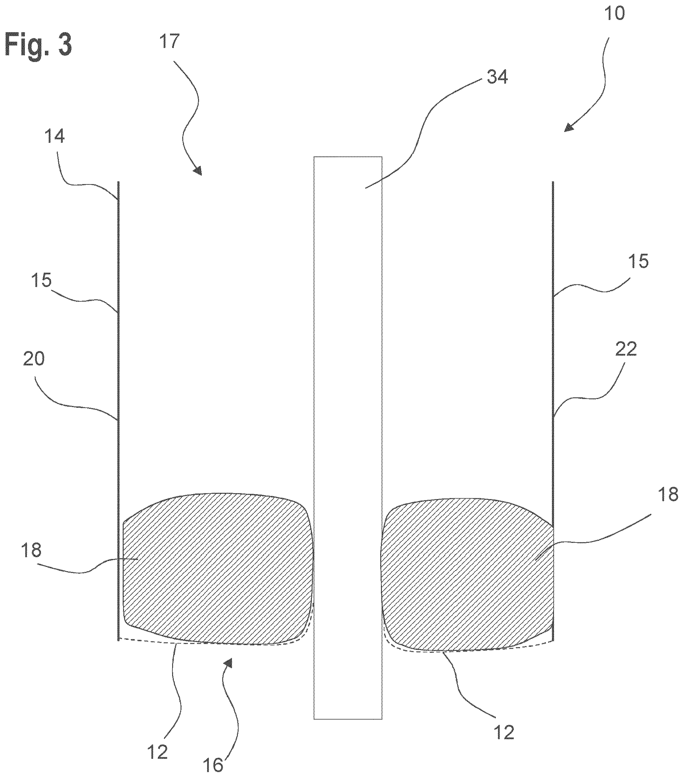

Figur 3 zeigt schematisch die Brandschutzvorrichtung 10 mit einer Leitung 34 in einer Schnittdarstellung, nachdem ein Brandfall eingetreten ist. Der Einfachheit halber ist die Brandschutzvorrichtung 10 in Figur 3 mit nur einem Schlauch 12 dargestellt.

Im Brandfall bläht sich das intumeszierende Material 18 aufgrund der hohen Umgebungstemperaturen auf ein Vielfaches seines ursprünglichen Volumens auf. Die Öffnung 16 wird dabei durch das intumeszierende Material 18 vollständig abgedichtet. Dies hat den Zweck, dass sich ein Feuer nicht über die Brandschutzvorrichtung 10 hinweg ausbreiten kann. Zudem können keine giftigen Rauchgase durch die Brandschutzvorrichtung in einen angrenzenden Raum gelangen. Des Weiteren werden so die Temperaturen an einer dem Feuer abgewandten Seite der Brandschutzvorrichtung 10 so gering wie möglich gehalten.

Durch die Ausdehnung des intumeszierenden Materials 18 wird das faltbare Material des Schlauches 12 in den Bereichen, in denen der Schlauch 12 frei beweglich ist, von der Gehäusewand 15 weg gedrückt. Die in Figur 1 gezeigten Befestigungspunkte 28, 30 verhindern dabei, dass der Schlauch 12 umgestülpt wird oder die frei beweglichen Abschnitte des Schlauches 12 zu weit aufgeklappt werden. Vorzugsweise schließen die frei beweglichen Abschnitte des Schlauches 12 einen Winkel zwischen 80° und 100° mit der Gehäusewand 15 ein. Der Schlauch 12 dient dabei als Auffangvorrichtung und verhindert somit, dass ein Teil des intumeszierenden Materials 18 nach unten aus der Öffnung 16 herausläuft. Infolgedessen kann eine besonders zuverlässige Abdichtung eines Wand- oder Deckendurchbruchs erreicht werden. Des Weiteren kann die Brandschutzvorrichtung 10 auch kostengünstig produziert werden, da aufgrund der geringen Verluste weniger intumeszierendes Material 18 benötigt wird.

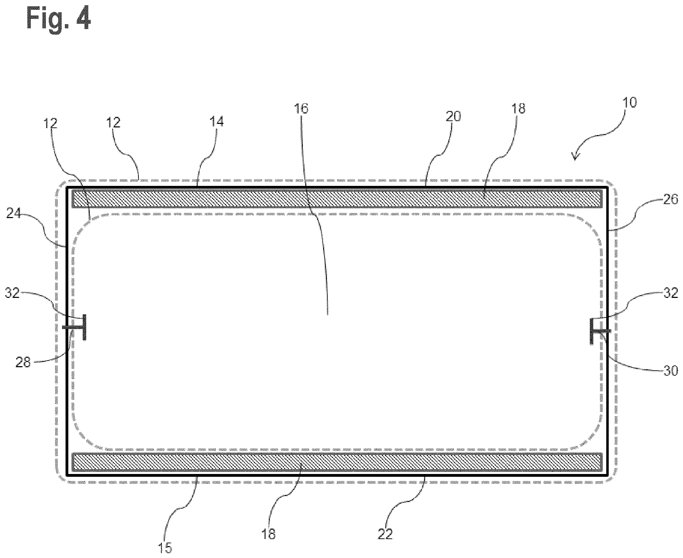

Figur 4 zeigt schematisch eine weitere Brandschutzvorrichtung 10 in einem Horizontalschnitt. Die Brandschutzvorrichtung 10 weist einen Schlauch 12 aus einem faltbaren Material auf, der vollumfänglich um das Gehäuse 14 angeordnet ist. Insbesondere ist der Schlauch 12 nicht an einem umlaufenden Rand einer Gehäuseöffnung 16 befestigt. Alternativ kann der Schlauch 12 jedoch an einem umlaufenden Rand einer Gehäuseöffnung 16 befestigt werden. Die restlichen Komponenten sind wie für Figur 1 beschrieben.

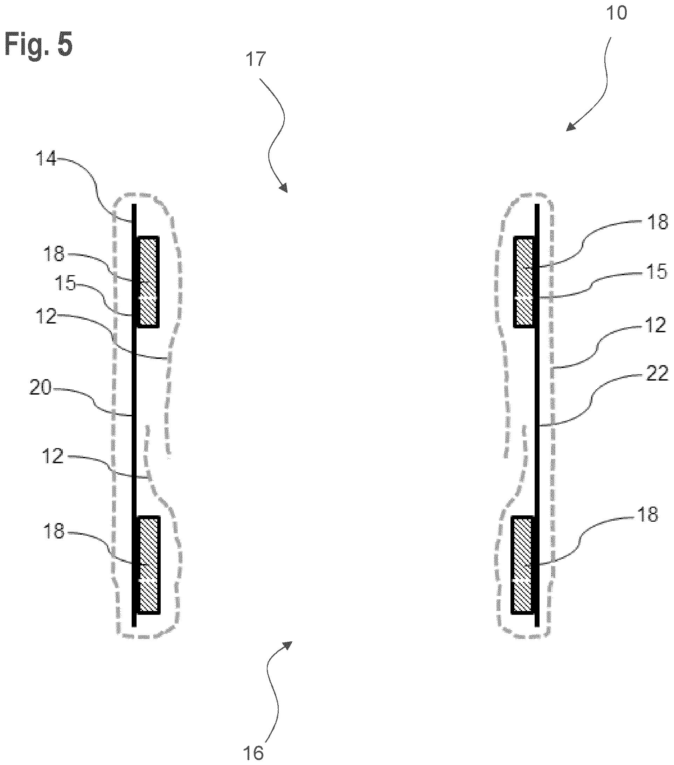

Figur 5 zeigt schematisch einen Querschnitt durch die Brandschutzvorrichtung 10 aus Figur 4. Die Brandschutzvorrichtung 10 weist insgesamt einen Schlauch 12 auf, wobei dieser vollumfänglich um das Gehäuse 14 angeordnet ist. Der Schlauch 12 ist an beiden Gehäuseöffnungen (16, 17) nach innen eingeklappt. Die restlichen Komponenten sind wie für Figur 2 beschrieben.

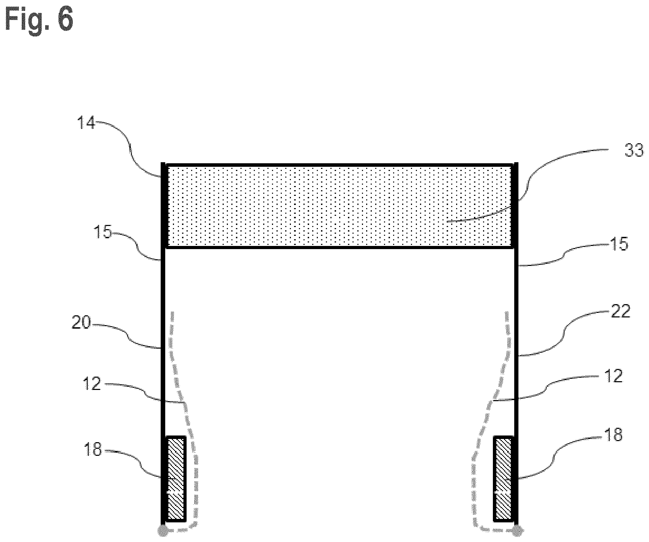

Figur 6 zeigt schematisch einen Querschnitt durch eine weitere Brandschutzvorrichtung 10, wobei das intumeszierende Material 18 und der mindestens eine Schlauch 12 teilweise auch durch ein anderes Material 33 ersetzt ist und ein Teil der Öffnung (16, 17) so verschlossen werden kann. Dieses Material kann beispielsweise ein Brandschutzschaum, Brandschutzmatte, Brandschutzgewebe, Mineralwolle, Brandschutzlamellen o.ä. sein.

## Patentansprüche

1. Brandschutzvorrichtung (10) zum Abdichten von Wand- oder Deckendurchbrüchen, aufweisend ein Gehäuse (14), welches eine Gehäusewand (15) und jeweils eine Öffnung (16,17) an den entgegengesetzten Enden der Gehäusewand (15) aufweist, und mindestens einen in dem Gehäuse (14) angeordneten Schlauch (12) aus einem faltbaren Material, wobei der Schlauch (12) entlang einem umlaufenden Rand einer der Öffnungen (16, 17) angeordnet ist, und wobei zwischen dem Schlauch (12) und der Gehäusewand (15) ein intumeszierendes Material (18) angeordnet ist.

2. Brandschutzvorrichtung (10) nach Anspruch 1, **dadurch gekennzeichnet, dass** der Schlauch (12) in mindestens einem Befestigungspunkt (28, 30) an der Gehäusewand (15) befestigt ist.

3. Brandschutzvorrichtung (10) nach Anspruch 2, **dadurch gekennzeichnet, dass** der Schlauch (12) in zwei gegenüberliegenden Befestigungspunkten (28, 30) an der Gehäusewand (15) befestigt ist.

4. Brandschutzvorrichtung (10) nach einem der vorhergehenden Ansprüche, **dadurch gekennzeichnet, dass** der Schlauch (12) in einem Normalzustand im Wesentlichen parallel zur Gehäusewand (15) verläuft und zumindest abschnittsweise frei beweglich angeordnet ist.

5. Brandschutzvorrichtung (10) nach Anspruch 4, **dadurch gekennzeichnet, dass** der Schlauch (12) derart frei beweglich angeordnet ist, dass das faltbare Material zumindest abschnittsweise bis zu einem Winkel von 100° zur Gehäusewand (15) auffaltbar ist.

6. Brandschutzvorrichtung (10) nach einem der vorhergehenden Ansprüche, **dadurch gekennzeichnet, dass** die Brandschutzvorrichtung (10) zwei Schläuche (12) aus faltbarem Material aufweist, wobei jeder Schlauch (12) entlang einem umlaufenden Rand einer Öffnung (16, 17) angeordnet ist.

7. Brandschutzvorrichtung (10) nach einem der vorhergehenden Ansprüche, **dadurch gekennzeichnet**, das intumeszierende Material (18) in Form eines Streifens zwischen dem Schlauch (12) und der Gehäusewand (15) angeordnet ist.

8. Brandschutzvorrichtung (10) nach einem der vorhergehenden Ansprüche, **dadurch gekennzeichnet, dass** das faltbare Material ein Gewebe, ein Gelege oder ein Gitter aufweist.

9. Brandschutzvorrichtung (10) nach einem der vorhergehenden Ansprüche, **dadurch gekennzeichnet, dass** das faltbare Material Glasfasern, Keramikfasern und/oder Metallfasern aufweist.

10. Brandschutzvorrichtung (10) nach einem der vorhergehenden Ansprüche, **dadurch gekennzeichnet, dass** das faltbare Material feuerfest ist.

11. Brandschutzvorrichtung (10) nach einem der vorhergehenden Ansprüche, **dadurch gekennzeichnet, dass** der mindestens eine Schlauch 12 vollumfänglich um die Gehäusewand angeordnet ist.
